(19) Europäisches Patentamt / European Patent Office / Office européen des brevets

(11) **EP 4 155 330 A1**

(12) **EUROPEAN PATENT APPLICATION**

(43) Date of publication:
**29.03.2023 Bulletin 2023/13**

(21) Application number: **22195431.6**

(22) Date of filing: **13.09.2022**

(51) International Patent Classification (IPC):
***C08F 220/18*** *(2006.01)* ***C09J 133/08*** *(2006.01)*

(52) Cooperative Patent Classification (CPC):
(C-Sets available)
**C09J 133/08; C08F 220/1808** (Cont.)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **BASF SE**
**67056 Ludwigshafen am Rhein (DE)**

(72) Inventors:
- **Schuhmacher, Karl-Heinz**
  **67056 Ludwigshafen (DE)**
- **Groeer, Saskia**
  **67056 Ludwigshafen (DE)**

(74) Representative: **BASF IP Association**
**BASF SE**
**GBI-C006**
**67056 Ludwigshafen (DE)**

# (54) PRESSURE-SENSITIVE ADHESIVE COMPOSITION COMPRISING A DISPERSED PRESSURE-SENSITIVE ADHESIVE POLYMER FORMED BY EMULSION POLYMERIZATION OF 2-OCTYL ACRYLATE, STYRENE, HYDROXYALKYL ACRYLATE, MONOMERS HAVING AT LEAST ONE ACID GROUP IN SPECIFIC AMOUNTS AND OPTIONALLY FURTHER MONOMERS

(57) Described is a pressure-sensitive adhesive composition in the form of an aqueous polymer dispersion comprising a dispersed pressure-sensitive adhesive polymer formed by emulsion polymerization of 2-octyl acrylate, styrene, hydroxyalkyl acrylate, monomers having at least one acid group in specific amounts and optionally further monomers. The pressure-sensitive adhesive composition may be used to produce self-adhesive articles such as self-adhesive labels, self-adhesive tapes or self-adhesive films.

EP 4 155 330 A1

(52) Cooperative Patent Classification (CPC): (Cont.)

C-Sets
**C08F 220/1808, C08F 212/08, C08F 220/06, C08F 220/20**

## Description

The invention relates to pressure-sensitive adhesive compositions in the form of an aqueous polymer dispersion comprising a dispersed pressure-sensitive adhesive polymer formed by emulsion polymerization of 2-octyl acrylate, styrene, a hydroxyalkyl acrylate and monomers having at least one acid group and optionally further monomers. The pressure-sensitive adhesive composition may be used to produce self-adhesive articles such as self-adhesive labels, self-adhesive tapes or self-adhesive films.

Aqueous pressure-sensitive adhesives are characterized by their adhesion-cohesion balance. Improved adhesion/cohesion balance is applicable in most pressure-sensitive adhesive applications and in particular for self-adhesive labels. For label applications high tack is desired to ensure high labelling line speeds while the adhesive needs to provide sufficient cohesion for good convertibility Typically one of these properties cannot be increased without reducing the other property. Another need for aqueous pressure-sensitive adhesives is a reduced carbon-footprint. Although this can be achieved by using partially or completely biobased monomers for producing adhesive polymers, the adhesion/cohesion balance requirement should be also met by the adhesive polymers based at least in part on bio-based monomers.

WO 2009/129087 describes the use of 2-octyl (meth)acrylates in adhesive compositions. WO 00/68335 describes contact bonding adhesives containing an aqueous polymer dispersion which is characterized in that the polymer is made from C1 to C12 alkyl(meth)acrylates, vinylaromatic compounds, ethylenically unsaturated hydroxy compounds and optionally further monomers. US 2020/0017725 A1 describes pressure-sensitive adhesive compositions comprising the emulsion polymerization product of a monomer mixture comprising an alkyl ester of (meth)acrylic acid, a vinyl aromatic monomer, a hydroxyl functional (meth)acrylate monomer and an ureido substituted monomer and optional further monomers.

It is an object of the present invention to provide aqueous-based (i.e. substantially free from organic solvents) polymeric pressure-sensitive adhesives with good or improved adhesion/cohesion balance, which is preferably based on at least partially bio-based acrylic monomers.

The present invention provides pressure-sensitive adhesive compositions in the form of aqueous polymer dispersions comprising at least one dispersed pressure-sensitive adhesive polymer formed by emulsion polymerization of

(i) from 10 to 95% by weight, based on the sum of all monomers, of 2-octyl acrylate;
(ii) from 0.1 to 5% by weight based on the sum of all monomers, of styrene;
(iii) from 0.1 to 5% by weight based on the sum of all monomers, of a hydroxyalkyl acrylate
(iv) from 0.1% to 10% by weight, based on the sum of all monomers, of at least one monomer having at least one acid group;
(v) from 0 to 70% by weight, based on the sum of all monomers, of 1-octyl acrylate;
(vi) from 0 to 40% by weight, based on the sum of all monomers, of isobutyl acrylate;
(vii) from 0 to 70% by weight, based on the sum of all monomers, of ethyl acrylate;
(viii) from 0 to 60% by weight, based on the sum of all monomers, of 2-ethylhexyl acrylate;
(ix) from 0 to 20% by weight, based on the sum of all monomers, of methyl (meth)acrylate;
(x) from 0 to 10% by weight, based on the sum of all monomers, of vinyl acetate;
(xi) optionally at least one (meth)acrylate alkyl ester monomer different from monomers (i) to (viii) and having, when polymerized as a homopolymer, a glass transition temperature of less than -20 °C;
(xii) optionally at least one functional monomer selected from hydroxyl functional (meth)acrylate monomers different from (iii) and ureido substituted ethylenically unsaturated monomers;
(xiii) optionally further monomers different from (i) to (xii),

wherein each of the weight ratios of 2-octyl acrylate (i) to styrene (ii) and of 2-octyl acrylate (i) to hydroxy alkyl acrylate (iii) is from 2:1 to 100:1, preferably 20:1 to 85:1;
wherein the glass transition temperature of the pressure-sensitive adhesive polymer is below -20°C, preferably from -50 to -25 °C, determined by differential scanning calorimetry as the midpoint temperature when evaluating the second heating curve at a heating rate of 20 K/min.

It has been found that a very high level of technical performance can be achieved, when 2-octyl acrylate is used as bio-based co-monomer in specific amounts to prepare acrylic polymer dispersions suitable for pressure-sensitive adhesives for self-adhesive labels and other self-adhesive applications. The performance level is at least on the same level as that of completely fossil-based adhesives, in some aspects even better.

The reported % by weight values of the monomers in each case relate to the sum of all monomers employed in the polymerization unless otherwise stated.

A pressure-sensitive adhesive is a viscoelastic adhesive which sets to form a film that at room temperature (20°C) remains permanently tacky and adhesive in the dry state. Adhesion to substrates is affected immediately by gentle pressure.

The text below occasionally uses the designation "(meth)acrylic" or "(meth)acrylate" and similar designations as an abbreviating notation for "acrylic or methacrylic" or "acrylate or methacrylate". In the designation Cx-alkyl (meth)acrylate and analogous designations, x denotes the number of carbon atoms in the alkyl group.

The terms "aqueous polymer dispersion" and "aqueous solvent" refers to solvent systems primarily based on water, preferably containing no or less than 10%, less than 5% or less than 1% by weight of organic solvents, based on the total composition.

The glass transition temperature is determined by differential scanning calorimetry as the midpoint temperature when evaluating the second heating curve at a heating rate of 20 K/min (ASTM D 3418-08).

The pressure-sensitive adhesive polymer is produced from 2-octyl acrylate. The amount of 2-octyl acrylate monomer (i) is from 10 to 95% by weight, preferably from 40 to 95% by weight, or from 50 to 95% by weight, or from 40 to less than 90% by weight, or from 60 to less than 90% by weight, based on the sum of all monomers. Preferably, the 2-octyl acrylate is bio-based, wherein the acrylic acid component or the 2-octyl component or both are bio-based. Preferred is partly bio-based 2-octyl acrylate which is an ester of non-bio-based acrylic acid and bio-based 2-octanol or fully bio-based 2-octyl acrylate which is an ester of bio-based acrylic acid and bio-based 2-octanol. Preferably, at least 50 wt.%, more preferred 100 wt.% of 2-octyl acrylate monomer (i) is made from bio-based 2-octanol and non-bio-based or bio-based acrylic acid, i.e. preferably at least the carbon atoms of the 2-octyl group of 2-octyl acrylate (i) are of biological origin.

Monomer (ii) styrene is used in an amount of from 0.1 to 5% by weight, preferably from 0.5 to 5% by weight, or from 1 to 5% by weight, or from 1 to 2% by weight, based on the sum of all monomers.

The pressure-sensitive adhesive polymer is produced from at least one monomer (iii), which is a hydroxyalkyl (meth)acrylate. This monomer is an hydroxyalkyl ester of (meth)acrylic acid with at least one hydroxy group in the hydroxyalkyl group. The amount of functional monomer (iii) is from 0.1 to 5% by weight, preferably from 0.5 to 5% by weight, or from 1 to 3% by weight, based on the sum of all monomers. Suitable hydroxyl functional (meth)acrylate monomers (iii) are $C_1$-$C_{10}$-hydroxyalkyl (meth)acrylates which have 1-10 carbon atoms in the hydroxyalkyl group. Preferred examples are hydroxyethyl acrylate, hydroxyethyl methacrylate, hydroxypropyl acrylate and hydroxybutyl acrylate. Most preferred is hydroxypropyl acrylate (including mixtures of isomers such as 2-hydroxy-propyl acrylate and 2-hydroxy-1-methylethyl acrylate).

The pressure-sensitive adhesive polymer is produced from monomers (iv) having at least one acid group. The amount of monomers (iv) having at least one acid group is from 0.1% to 10% by weight, preferably from 0.2% to 8% by weight, more preferably from 0.5% to 5% by weight, based on the sum of all monomers. Monomers (iv) are monomers having at least one acid group (acid monomers), i.e. ethylenically unsaturated acids or ethylenically unsaturated acid anhydrides, and are polymerizable by free-radical polymerization. Suitable acid monomers are, for example, ethylenically unsaturated carboxylic acids, ethylenically unsaturated sulfonic acids and vinylphosphonic acid. Preferably employed as ethylenically unsaturated carboxylic acids are alpha,beta-monoethylenically unsaturated mono- and dicarboxylic acids comprising 3 to 6 carbon atoms in the molecule. Examples thereof are acrylic acid, methacrylic acid, itaconic acid, maleic acid, fumaric acid, crotonic acid, vinylacetic acid and vinyllactic acid. Examples of suitable ethylenically unsaturated sulfonic acids include vinylsulfonic acid, styrene sulfonic acid, acrylamidomethylpropane sulfonic acid, sulfopropyl acrylate and sulfopropyl methacrylate. Acrylic acid, methacrylic acid, itaconic acid and mixtures thereof are preferred and acrylic acid is particularly preferred.

The pressure-sensitive adhesive polymer is produced from 1-octyl acrylate in an amount of from 0 to 70% by weight, preferably from 0 to 50% by weight or from 0 to 30% by weight, or from 1 to 30% by weight, based on the sum of all monomers. Preferably, the 1-octyl acrylate is bio-based, wherein the acrylic acid component or the 1-octyl component or both are bio-based. Preferred is partly bio-based 1-octyl acrylate which is an ester of non-bio-based acrylic acid and bio-based 1-octanol or fully bio-based 1-octyl acrylate which is an ester of bio-based acrylic acid and bio-based 1-octanol. Preferably, at least 50 wt.%, more preferred 100 wt.% of 1-octyl acrylate monomer is made from bio-based 1-octanol and non-bio-based or bio-based acrylic acid, i.e. preferably at least the carbon atoms of the 1-octyl group of 1-octyl acrylate are of biological origin.

The pressure-sensitive adhesive polymer is produced from isobutyl acrylate in an amount of from 0 to 40% by weight, preferably from 0 to 20% by weight or from 0 to 10% by weight, or from 1 to 10% by weight, based on the sum of all monomers. Preferably, the isobutyl acrylate is bio-based, wherein the acrylic acid component or the isobutyl component or both are bio-based. Preferred is partly bio-based isobutyl acrylate which is an ester of non-bio-based acrylic acid and bio-based isobutanol or fully bio-based isobutyl acrylate which is an ester of bio-based acrylic acid and bio-based isobutanol. Preferably, at least 50 wt.%, more preferred 100 wt.% of isobutyl acrylate monomer is made from bio-based isobutanol and non-bio-based or bio-based acrylic acid, i.e. preferably at least the carbon atoms of the isobutyl group of isobutyl acrylate are of biological origin.

The pressure-sensitive adhesive polymer is produced from ethyl acrylate in an amount of from 0 to 70% by weight, preferably from 0 to 40% by weight, or from 1 to 40% by weight, or from 5 to 30% by weight, based on the sum of all monomers. Preferably, the ethyl acrylate is bio-based, wherein the acrylic acid component or the ethyl component

or both are bio-based. Preferred is partly bio-based ethyl acrylate which is an ester of non-bio-based acrylic acid and bio-based ethanol or fully bio-based ethyl acrylate which is an ester of bio-based acrylic acid and bio-based ethanol. Preferably, at least 50 wt.%, more preferred 100 wt.% of ethyl acrylate monomer is made from bio-based ethanol and non-bio-based or bio-based acrylic acid, i.e. preferably at least the carbon atoms of the ethyl group of ethyl acrylate are of biological origin.

The pressure-sensitive adhesive polymer is produced from 2-ethylhexyl acrylate in an amount of from 0 to 60% by weight, preferably from 1 to 40% by weight or from 2 to 20% by weight, based on the sum of all monomers.

The pressure-sensitive adhesive polymer is produced from of methyl (meth)acrylate in an amount of from 0 to 20% by weight, preferably from 0 to 15% by weight, or from 1 to 20% by weight or from 2 to 15%, or from 2 to 10% by weight, based on the sum of all monomers.

The pressure-sensitive adhesive polymer is produced from vinyl acetate in an amount of from 0 to 10% by weight, preferably from 0 to 8%, or from 1 to 8% by weight, based on the sum of all monomers.

The pressure-sensitive adhesive polymer is optionally produced from at least one monomer (xi) which is a (meth)acrylate alkyl ester monomer different from monomers (i) and (v) to (viii) and having, when polymerized as a homopolymer, a glass transition temperature of less than -20 °C (so-called "soft" monomer). The amount of soft (meth)acrylic ester monomer (xi) is preferably from 0 to 30% by weight, preferably from 1% to 30% by weight or from 2 to 25% by weight, or from 3 to 20% by weight, based on the sum of all monomers. The soft monomers (xi) are preferably selected from acrylic esters, in particular from $C_3$- to $C_{10}$-alkyl acrylates, or from $C_4$- to $C_8$-alkyl acrylates. Suitable examples include n-propyl acrylate, n-butyl acrylate, n-hexyl acrylate, n- heptyl acrylate, and isooctyl acrylate (2-methylheptyl acrylate) and also mixtures of these monomers.

The pressure-sensitive adhesive polymer is optionally produced from at least one functional monomer (xii) selected from hydroxyl functional (meth)acrylate monomers different from (iii) and ureido substituted ethylenically unsaturated monomers. The amounts of monomers (xii) are preferably from 0 to 10% by weight, or from 0,1 to 10% by weight, or from 0.5 to 7% by weight, based on the sum of all monomers.

Examples of hydroxyl functional (meth)acrylate monomers different from (iii) are N-alkylol-(meth)acrylamides such as N-methylol(meth)acrylamide. Preferred amounts of hydroxyl functional (meth)acrylate monomers different from (iii) are 0 to 5% by weight, or 0.5 to 5 % by weight based on the sum of all monomers.

The ureido substituted ethylenically unsaturated monomer has at least one ethylenically unsaturated, radically polymerizable group and at least one functional group selected from ureido groups. Suitable ureido substituted ethylenically unsaturated monomers are monomers selected from the group consisting of (meth)acrylate monomers having a substituent of the formula

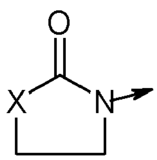

where X is NH or NR, and R is a C1 to C4 alkyl group and the arrow at the N-atom denotes the linkage point of the substituent to the (meth)acrylate monomer. Suitable ureido substituted ethylenically unsaturated monomers are, for example, those of the formula

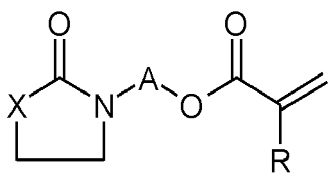

where X is as defined above, R is hydrogen or methyl, and A is a divalent linking group, preferably a C1 to C10 alkyl group or a C2 to C4 alkyl group. Particular preference is given to using ureidoalkyl (meth)acrylates having 1 to 10 C atoms, preferably 2 to 4 C atoms in the alkyl group, Most preferred is ureidoethyl methacrylate (2-(2-oxoimidazolidin-1-yl)ethyl methacrylate; also identified as ureido methacrylate or abbreviated as UMA). Preferred amounts of ureido substituted ethylenically unsaturated monomers are from 0,05 to 2% by weight, more preferred from 0.1 to 2% by weight, or from 0,1 to 1% by weight, based on the sum of all monomers.

The pressure-sensitive adhesive polymer is optionally produced from at least one monomer, which is different from monomers (i) to (xii). The monomers are copolymerizable, ethylenically unsaturated compounds. The amount of monomers (xii) is preferably from 0 to 10% by weight or from 0 to 5% by weight, based on the sum of all monomers.

Monomers are for example selected from vinyl esters of carboxylic acids comprising up to 20 carbon atoms different from vinyl acetate, vinylaromatics different from styrene and having up to 20 carbon atoms, ethylenically unsaturated nitriles, vinyl halides, vinyl ethers of alcohols comprising 1 to 10 carbon atoms, aliphatic hydrocarbons having 2 to 8 carbon atoms and one or two double bonds and (meth)acrylamides or mixtures of these monomers. Further monomers additionally include phenyloxyethyl glycol mono(meth)acrylate, glycidyl (meth)acrylate, aminoalkyl (meth)acrylates, for example 2-aminoethyl (meth)acrylate. Alkyl groups preferably have from 1 to 20 carbon atoms. Vinyl esters of carboxylic acids having 1 to 20 carbon atoms are for example vinyl laurate, vinyl stearate, vinyl propionate and vinyl versatate. Vinylaromatic compounds include vinyltoluene, alpha- and p-methylstyrene, alpha-butylstyrene, 4-n-butylstyrene, 4-n-decylstyrene. Examples of nitriles are acrylonitrile and methacrylonitrile. The vinyl halides are ethylenically unsaturated compounds substituted by chlorine, fluorine or bromine, preferably vinyl chloride and vinylidene chloride. Examples of vinyl ethers include vinyl methyl ether or vinyl isobutyl ether. Preference is given to vinyl ethers of alcohols comprising 1 to 4 carbon atoms. Suitable hydrocarbons having 4 to 8 carbon atoms and two olefinic double bonds are, for example, butadiene, isoprene and chloroprene.

A preferred pressure-sensitive adhesive composition comprises at least one pressure-sensitive adhesive polymer formed by emulsion polymerization of

(i) from 40 to 95% by weight, based on the sum of all monomers, of 2-octyl acrylate;
(ii) from 0.5% to 5% by weight based on the sum of all monomers, of styrene;
(iii) from 0.5 to 5% by weight based on the sum of all monomers, of at least one hydroxyalkyl acrylate, preferably selected from hydroxyethyl acrylate, hydroxyethyl methacrylate, hydroxypropyl acrylate and hydroxybutyl acrylate;
(iv) from 0.2% to 8% by weight, based on the sum of all monomers, of at least one monomer having at least one acid group, preferably selected from acrylic acid and methacrylic acid;
(v) from 0 to 30% by weight, based on the sum of all monomers, of 1-octyl acrylate;
(vi) from 0 to 20% by weight, based on the sum of all monomers, of i-butyl acrylate;
(vii) from 0 to 40% by weight, based on the sum of all monomers, of ethyl acrylate;
(viii) from 0 to 40% by weight, based on the sum of all monomers, of 2-ethylhexyl acrylate;
(ix) from 0 to 10% by weight, based on the sum of all monomers, of methyl methacrylate;
(x) from 0 to 10% by weight, based on the sum of all monomers, of vinyl acetate;

and preferably no further monomer (xi) to (xiii).

A preferred pressure-sensitive adhesive composition comprises at least one pressure-sensitive adhesive polymer formed by emulsion polymerization of

(i) from 50 to 80% by weight, based on the sum of all monomers, of 2-octyl acrylate;
(ii) from 0.5 to 5% by weight based on the sum of all monomers, of styrene;
(iii) from 0.5 to 5% by weight based on the sum of all monomers, of a hydroxyalkyl acrylate, preferably selected from hydroxyethyl acrylate, hydroxyethyl methacrylate, hydroxypropyl acrylate and hydroxybutyl acrylate;
(iv) from 0.2 to 8% by weight, based on the sum of all monomers, of at least one monomer having at least one acid group, preferably selected from acrylic acid and methacrylic acid; wherein the sum of the amount of monomers (v) to (viii) is from 18 to 48% by weight;
(ix) from 0 to 10% by weight, based on the sum of all monomers, of methyl methacrylate;
(x) from 0 to 10% by weight, based on the sum of all monomers, of vinyl acetate;

and preferably no further monomer (xi) to (xiii).

A preferred pressure-sensitive adhesive composition comprises at least one pressure-sensitive adhesive polymer formed by emulsion polymerization of

(i) from 75 to 95% by weight, based on the sum of all monomers, of 2-octyl acrylate;
(ii) from 0.5% to 5% by weight based on the sum of all monomers, of styrene;
(iii) from 0.5 to 5% by weight based on the sum of all monomers, of a hydroxyalkyl acrylate preferably selected from hydroxyethyl acrylate, hydroxyethyl methacrylate, hydroxypropyl acrylate and hydroxybutyl acrylate;
(iv) from 0.2% to 8% by weight, based on the sum of all monomers, of at least one monomer having at least one acid group preferably selected from acrylic acid and methacrylic acid; wherein the sum of the amount of monomers (v) to (viii) is from 0 to 15% by weight;
(ix) from 0 to 10% by weight, based on the sum of all monomers, of methyl methacrylate;
(x) from 0 to 10% by weight, based on the sum of all monomers, of vinyl acetate;

and preferably no further monomer (xi) to (xiii).

Preferably and for sustainability reasons, bio-based materials are used for producing the pressure-sensitive adhesive polymer, which preferably is partly or completely made of partly or fully bio-based monomers. Bio-based materials are materials which are made from a renewable source and have a smaller impact on the environment. They do not require all the refining steps required for petroleum-based products, which are very expensive in terms of energy. The production of $CO_2$ is reduced such that bio-based materials contribute less to global warming. The term "bio-based" indicates that the material is of biological origin and comes from biomaterial and renewable resources. A material of renewable origin or biomaterial is an organic material wherein the carbon comes from the $CO_2$ fixed recently (on a human scale) by photosynthesis from the atmosphere. A biomaterial (carbon of 100% natural origin) has an isotopic ratio $^{14}C/^{12}C$ greater than $10^{-12}$, typically about $1.2\times10^{-12}$, while a fossil material has a zero ratio. Indeed, the isotopic $^{14}C$ is formed in the atmosphere and is then integrated via photosynthesis, according to a time scale of a few tens of years at most. The half-life of the $^{14}C$ is 5730 years. Thus, the materials coming from photosynthesis, namely plants in general, necessarily have a maximum content in isotope $^{14}C$. The determination of the content of biomaterial or of bio-carbon can be carried out in accordance with the standards ASTM D 6866-12, the method B (ASTM D 6866-06) and ASTM D 7026 (ASTM D 7026-04). Preferably, the pressure-sensitive adhesive polymer has a content of bio-carbon of at least 10 mol-% or at least 15 mol-% or higher, e.g. 20 mol-%, 30 mol-% or 40 mol-% or higher, based on the total amount of carbon atoms in the pressure-sensitive adhesive polymer. A polymer which is partly made of fully or partly biobased monomers is a polymer where not all monomers used in the polymerization are partly or fully biobased monomers. A partly biobased monomer is a monomer where not all C-atoms are biobased, for example (meth)acrylic acid esters where only the acid part or only the alcohol part is biobased.

Suitable bio-based materials for producing the pressure-sensitive adhesive polymer are for example (meth)acrylic esters, wherein the (meth)acrylic acid component or the alcohol component or both are bio-based. Various methods of producing bio-based acrylic acid from renewable plant materials are mentioned in EP 2626397 A1. Suitable bio-based alcohols are for example bio-based iso-butanol, bio-based n-butanol, bio-based ethanol, bio-based iso-pentanol (3-methylbutan-1-ol), bio-based 2-octanol, bio-based 1-octanol and bio-based n-heptanol. Preferred partly biobased monomers are esters of (meth)acrylic acid and bio-based alcohols, preferably bio-based 2-octanol (i) bio-based 1-octanol (v), bio-based ethanol (vii), bio-based iso-butanol (vi), bio-based n-butanol, bio-based iso-pentanol (3-methylbutan-1-ol), bio-based and bio-based n-heptanol. Preferred fully biobased monomers are esters of bio-based acrylic acid and bio-based alcohols as mentioned above. Preferably at least the carbon atoms of the alkyl group of at least one of the monomers 2-octyl acrylate, 1-octyl acrylate, isobutyl acrylate and ethyl acrylate is of biological origin. Preferably, at least 50 wt.%, more preferred 100 wt.% of 2-octyl acrylate monomer (i) is made from bio-based 2-octanol and non-bio-based or bio-based acrylic acid, i.e. preferably at least the carbon atoms of the 2-octyl group of 2-octyl acrylate (i) are of biological origin. Preferably, monomers (vi) comprise iso butyl acrylate wherein at least the carbon atoms of the iso butyl group are of biological origin.

The glass transition temperature (Tg) of the pressure-sensitive adhesive polymer is below -20°C, preferably from -50 to -25 °C. Through targeted variation of monomer type and quantity, those skilled in the art are able according to the invention to produce aqueous polymer compositions whose polymers have a glass transition temperature in the desired range.

Orientation is possible using the Fox equation. According to Fox (T.G. Fox, Bull. Am. Phys. Soc. 1956 [Ser. II] 1, page 123 and according to Ullmann's Encyclopedia of Industrial Chemistry, vol. 19, page 18, 4th edition, Verlag Chemie, Weinheim, 1980), the glass transition temperature of copolymers is given to a good approximation by:

$$1/T_g = x^1/T_g^1 + x^2/T_g^2 + .... x^n/T_g^n,$$

wherein $x^1$, $x^2$, .... $x^n$ are the mass fractions of the monomers 1, 2, .... n and $T_g^1$, $T_g^2$, .... $T_g^n$ are the glass transition temperatures in degrees Kelvin of the polymers constructed from only one of the monomers 1, 2, .... n at a time. The $T_g$ values for the homopolymers of the majority of monomers are known and are listed for example in Ullmann's Encyclopedia of Industrial Chemistry, vol. 5, vol. A21, page 169, VCH Weinheim, 1992; further sources for glass transition temperatures of homopolymers are, for example, J. Brandrup, E.H. Immergut, Polymer Handbook, 1st Ed., J. Wiley, New York 1966, 2nd Ed. J. Wiley, New York 1975, and 3rd Ed. J. Wiley, New York 1989.

The polymer dispersions employed according to the invention are obtainable by free-radical emulsion polymerization of ethylenically unsaturated, free-radically polymerizable compounds (monomers). The emulsion polymerization comprises polymerizing ethylenically unsaturated compounds (monomers) in water using ionic and/or nonionic emulsifiers and/or protective colloids or stabilizers as surface-active compounds to stabilize the monomer droplets and the polymer particles subsequently formed from the monomers. The surface-active substances are typically used in amounts of 0.1 to 10 parts by weight, preferably 0.2 to 5 parts by weight, based on 100 parts by weight of the monomers to be polymerized.

A detailed description of suitable protective colloids can be found in Houben-Weyl, Methoden der organischen

Chemie [Methods of Organic Chemistry], volume XIV/1, Makromolekulare Stoffe [Macromolecular Materials], Georg-Thieme-Verlag, Stuttgart, 1961, p. 411 to 420. Useful emulsifiers include anionic, cationic and also nonionic emulsifiers. As surface-active substances it is preferable to employ emulsifiers whose molecular weight is typically below 2000 g/mol in contrast with the protective colloids. When mixtures of surface-active substances are used, the individual components must of course be compatible with one another; in case of doubt, this may be checked on the basis of a few preliminary experiments. Preference is given to using anionic and nonionic emulsifiers as surface-active substances. Customary accompanying emulsifiers are for example ethoxylated fatty alcohols (EO degree: 3 to 50, alkyl radical: $C_8$ to $C_{36}$), ethoxylated mono-, di- and trialkylphenols (EO degree: 3 to 50, alkyl radical: $C_4$ to $C_9$), alkali metal salts of dialkyl esters of sulfosuccinic acid and alkali metal and ammonium salts of alkyl sulfates (alkyl radical: $C_8$ to $C_{12}$), of ethoxylated alkanols (EO degree: 4 to 30, alkyl radical: $C_{12}$ to $C_{18}$), of ethoxylated alkylphenols (EO degree: 3 to 50, alkyl radical: $C_4$ to $C_9$), of alkylsulfonic acids (alkyl radical: $C_{12}$ to $C_{18}$) and of alkylarylsulfonic acids (alkyl radical: $C_9$ to $C_{18}$).

Further suitable emulsifiers are compounds of the general formula

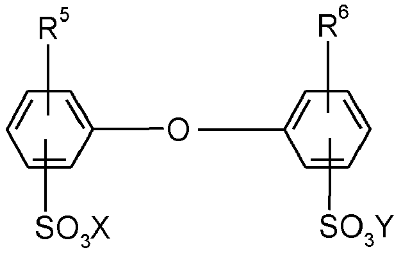

wherein R5 and R6 are hydrogen or C4- to C14-alkyl and are not simultaneously hydrogen, and X and Y may be alkali metal ions and/or ammonium ions. R5, R6 are preferably linear or branched alkyl radicals having 6 to 18 carbon atoms or hydrogen and in particular having 6, 12 and 16 carbon atoms, wherein R5 and R6 are not both simultaneously hydrogen. X and Y are preferably sodium, potassium or ammonium ions, wherein sodium is particularly preferred. Compounds in which X and Y are sodium, R5 is a branched alkyl radical having 12 carbon atoms and R6 is hydrogen or R5 are particularly advantageous. Often employed are industrial mixtures comprising a proportion of 50% to 90% by weight of the monoalkylated product. Commercially available products of suitable emulsifiers are for example Dowfax®2 A1, Emulan® NP 50, Dextrol® OC 50, Emulgator 825, Emulgator 825 S, Emulan® OG, Texapon® NSO, Nekanil® 904 S, Lumiten® I-RA, Lumiten® E 3065, Disponil® FES 77, Lutensol® AT 18, Steinapol® VSL, Emulphor® NPS 25. Ionic emulsifiers or protective colloids are preferred for the present invention. Particular preference is given to ionic emulsifiers, in particular salts and acids, such as carboxylic acids, sulfonic acids and sulfates, sulfonates or carboxylates. Also employable in particular are mixtures of ionic and nonionic emulsifiers.

The polymerization may also be carried out in the presence of a protective colloid. Protective colloids are polymeric compounds which upon solvation bind large quantities of water and are capable of stabilizing dispersions of water-insoluble polymers. In contrast to emulsifiers, they generally do not lower the interfacial surface tension between polymer particles and water. The number-average molecular weight of protective colloids is above 1000 g/mol for example.

The emulsion polymerization may be initiated using water-soluble initiators. Water-soluble initiators are for example ammonium salts and alkali metal salts of peroxodisulfuric acid, for example sodium peroxodisulfate, hydrogen peroxide or organic peroxides, for example tert-butyl hydroperoxide. Also suitable as initiators are so-called reduction-oxidation (redox) initiator systems. Redox initiator systems consist of at least one generally inorganic or organic reducing agent and an inorganic or organic oxidizing agent. The oxidizing component is, for example, the emulsion polymerization initiators already mentioned hereinabove. The reductant components are for example alkali metal salts of sulfurous acid, such as for example sodium sulfite, sodium hydrogensulfite, alkali metal salts of disulfurous acid such as sodium disulfite, bisulfite addition compounds of aliphatic aldehydes and ketones, such as acetone bisulfite or reducing agents such as hydroxymethanesulfinic acid and the salts thereof, or ascorbic acid. The redox initiator systems may be employed with co-use of soluble metal compounds whose metallic component may appear in a plurality of valence states. Typical redox initiator systems are, for example, ascorbic acid/iron(II) sulfate/sodium peroxydisulfate, tert-butyl hydroperoxide/sodium disulfite, tert-butyl hydroperoxide/sodium hydroxymethanesulfinic acid. The individual components, for example the reductant component, may also be mixtures, for example a mixture of the sodium salt of hydroxymethanesulfinic acid and sodium disulfite.

The recited initiators are generally employed in the form of aqueous solutions, the lower concentration limit being determined by the amount of water acceptable in the dispersion and the upper concentration limit being determined by the solubility in water of the particular compound. The concentration of the initiators is generally from 0.1 to 30 wt.%, preferably from 0.5 to 20 wt.% and more preferably from 1.0 to 10 wt.% based on the monomers to be polymerized. It is also possible to use two or more different initiators in the emulsion polymerization.

The polymerization may employ chain transfer agents. It is preferable when no chain transfer agents are employed. When chain transfer agents are employed they are preferably employed in amounts of at least 0.01 parts by weight of chain transfer agent per 100 parts by weight of monomers, for example of 0.01 to 5 parts by weight, or of 0.01 to 3 parts by weight, preferably of 0.01 to 0.75 parts by weight, to 100 parts by weight of the monomers to be polymerized. This makes it possible to control/reduce the molar mass of the emulsion polymer through a chain termination reaction. The chain transfer agents are bonded to the polymer in this procedure, generally to the chain end. The addition may be carried out during the polymerization continuously or in stages. Suitable chain transfer agents are for example organic compounds comprising sulfur in bonded form (for example compounds having a thiol group), aliphatic and/or araliphatic halogen compounds, aliphatic and/or aromatic aldehydes, unsaturated fatty acids (for example oleic acid), dienes having non-conjugated double bonds (for example divinylmethane, terpinols or vinyl cyclohexene), hydrocarbons having easily abstractable hydrogen atoms (for example toluene), organic acids or salts thereof (for example formic acid, sodium formate, ammonium formate), alcohols (for example isopropanol) and phosphorus compounds (for example sodium hypophosphite). It is alternatively possible to employ compatible mixtures of the above mentioned chain transfer agents. The chain transfer agents are generally compounds of low molecular mass, having a molar weight of less than 2000, in particular less than 1000 g/mol. It is advantageous when a sub-amount or the total amount of the chain transfer agents is supplied to the aqueous reaction medium before initiation of the free-radical polymerization. In addition, a sub-amount or the total amount of the free-radical chain-transferring compound may advantageously also be supplied to the aqueous reaction medium together with the monomers during the polymerization. Preferred organic compounds comprising sulfur in bonded form are in particular tert-butyl mercaptan, ethyl thioglycolate, mercaptoethanol, mercaptopropyl trimethoxysilane, tert-dodecyl mercaptan, thiodiglycol, ethyl thioethanol, di-n-butyl sulfide, 2-isopropyl sulfide, di-n-octyl sulfide, diphenyl sulfide, diisopropyl disulfide, 2-mercaptoethanol, 1,3-mercapto-propanol, 3-mercaptopropane-1,2-diol, 1,4-mercaptobutanol, thioglycolic acid, 3-mercaptopropionic acid, mercaptosuccinic acid, thioacetic acid and thiourea. Particularly preferred thio compounds are tert-butyl mercaptan, ethyl thioglycolate, mercaptoethanol, mercaptopropyl trimethoxysilane, 2-ethylhexyl thioglycolate (EHTG), isooctyl 3-mercaptopropionate (IOMPA) or tert-dodecyl mercaptan (tDMK).

The emulsion polymerization is generally carried out at 30°C to 130°C, preferably at 50°C to 95°C. The polymerization medium may consist either only of water or of mixtures of water and liquids miscible therewith such as methanol. Preference is given to using solely water.

The emulsion polymerization may be carried out either as a batch process or in the form of a feed process, including the staged and gradient operating modes of a feed process. Preference is given to the feed process in which a portion of the polymerization batch is initially charged, heated to the polymerization temperature and incipiently polymerized before the remainder of the polymerization batch is supplied, typically via a plurality of spatially separate feeds, one or more of which comprise the monomers in pure form or in emulsified form, continuously, in stages or with superposition of a concentration gradient while maintaining the polymerization in the polymerization zone.

It is also possible in the polymerization to initially charge a polymer seed for more effective adjustment of particle size. Seed latex is an aqueous dispersion of finely divided polymer particles having an average particle diameter of preferably 20 to 40 nm. Seed latex is used in an amount of preferably 0.01 to 0.5 parts by weight, particularly preferably of 0.03 to 0.3 parts by weight, based on 100 parts by weight of monomers. A latex based on polystyrene or based on polymethyl methacrylate is suitable for example. One preferred seed latex is polystyrene seed.

The manner in which the initiator is added to the polymerization vessel over the course of the free-radical aqueous emulsion polymerization is known to those of ordinary skill in the art. It may be either initially charged to the polymerization vessel in its entirety or employed continuously or in a staged manner at the rate of its consumption over the course of the free-radical aqueous emulsion polymerization. This specifically depends on the chemical nature of the initiator system and on the polymerization temperature. Preference is given to initially charging a portion and supplying the remainder to the polymerization zone at the rate of its consumption. To remove the residual monomers, initiator is typically also added after termination of the actual emulsion polymerization, i.e. after a monomer conversion of at least 95%. In the feed process, the individual components may be added to the reactor from above, from the side or from below through the reactor floor.

The emulsion polymerization generally affords aqueous dispersions of the polymer having solids contents of from 15% to 75% by weight, preferably from 40% to 75% by weight, particularly preferably not less than 50% by weight. Dispersions having a very high solids content are preferred for a high reactor space/time yield. In order that solids contents of >60 wt.% may be achieved, a bi- or polymodal particle size should be established since otherwise the viscosity becomes too high and the dispersion is difficult to handle. A new generation of particles may be produced, for example, by addition of seed (EP 81083), by addition of excess emulsifier amounts or by addition of miniemulsions. A further advantage associated with low viscosity at high solids content is improved coating characteristics at high solids contents. Production of (a) new particle generation(s) may be effected at any point in time. It is guided by the particle-size distribution that is sought for a low viscosity. The polymer thus produced is preferably used in the form of its aqueous dispersion. The size distribution of the dispersion particles may be monomodal, bimodal or multimodal.

The neutralization of acid groups of the polymer is preferably carried out by feeding of a neutralizing agent

during or after the polymerization, wherein the acid groups are fully or partially neutralized by feeding of a base. The neutralizing agent may be added for example in a separate feed simultaneously with the feeding of the monomer mixture. After feeding of all monomers it is preferable when the amount of neutralizing agent necessary for neutralization of at least 10%, preferably from 10% to 100% or from 25% to 90%, of acid equivalents is present in the polymerization vessel. A particularly preferred neutralizing agent is ammonia. The pH of the polymer dispersion is preferably adjusted to a pH greater than 4.5, more particularly to a pH of between 5 and 8.

The pressure-sensitive adhesive composition may comprise at least one tackifier (tackifying resin). A tackifier is a polymeric or oligomeric additive for adhesive polymers or generally for elastomers which increases their autoadhesion (tack, inherent tack, self-adhesion) so that after short, light contact pressure they adhere to surfaces firmly. Tackifiers include for example natural resins, such as colophony resins and the derivatives thereof formed by disproportionation or isomerization, polymerization, dimerization or hydrogenation or terpene resins. These may be in their salt form (with for example monovalent or polyvalent counterions (cations)) or preferably in their esterified form. Alcohols used for esterification may be monohydric or polyhydric. Examples include methanol, ethanediol, diethylene glycol, triethylene glycol, 1,2,3-propanethiol, pentaerythritol. Further employable tackifying resins are hydrocarbon resins, for example coumarone-indene resins, polyterpene resins, hydrocarbon resins based on unsaturated CH compounds, such as butadiene, pentene, methylbutene, isoprene, piperylene, divinylmethane, pentadiene, cyclopentene, cyclopentadiene, cyclohexadiene, styrene, alpha-methylstyrene, vinyltoluene. Tackifiers are known for example from Adhesive Age, July 1987, pages 19-23 or Polym. Mater. Sci. Eng. 61 (1989), pages 588-592.

Polyacrylates having a low molar weight can also be used as tackifiers. These polyacrylates preferably have a weight-average molecular weight $M_w$ less than 50 000, in particular less than 30 000. The tackifying polyacrylates preferably consist to an extent of at least 60% by weight, in particular at least 80% by weight, of $C_1$-$C_8$ alkyl (meth)acrylates. Suitable tackifiers include for example the low-molecular-weight polymers and oligomers described in WO 2013/117428 having a weight-average molecular weight of less than 50 000 and a glass transition temperature of not less than -40°C to not more than 0°C, preferably of not less than -35°C to not more than 0°C, producible by emulsion polymerization in the presence of at least one molecular weight regulator and producible from a monomer mixture comprising at least 40% by weight of at least one C1- to C20-alkyl (meth)acrylate.

Preferred tackifiers are selected from the group consisting of natural resins, hydrocarbon resins, tackifying polyacrylates or mixtures thereof. Particularly preferred tackifiers include natural or chemically modified colophony resins. Colophony resins consist predominantly of abietic acid or abietic acid derivatives or hydrogenated derivatives thereof. The tackifiers may be added to the polymer dispersion in simple fashion. The tackifiers themselves are preferably in the form of an aqueous dispersion. The amount by weight of the tackifiers is preferably 5 to 100 parts by weight, particularly preferably, 5 to 50, 5 to 40, or 10 to 40 parts by weight, based on 100 parts by weight of polymer (solid/solid). Most preferred are tackifiers of biological origin such as natural resins, including chemically modified natural resins-

The pressure-sensitive adhesive composition may comprise further additives, for example fillers, dyes, leveling agents, flow control assistants, thickeners (preferably associative thickeners, more preferably associative polyurethane thickeners), defoamers, crosslinkers, plasticizers, pigments, UV protectants, biocides, dispersing aids or wetting agents. For better wetting of surfaces the pressure-sensitive adhesives may include in particular wetting auxiliaries (wetting agents), for example fatty alcohol ethoxylates, alkylphenol ethoxylates, sulfosuccinic esters, nonylphenol ethoxylates, polyoxyethylene/polyoxypropylene copolymers or sodium dodecyl-sulfonates.

Defoaming agents are oil-based defoamers, water-based defoamers or silicone-based defoamers. Oil based defoamers have an oil carrier. The oil might be mineral oil, vegetable oil, white oil or any other oil that is insoluble in the foaming medium. An oil based defoamer also contains a wax and/or hydrophobic silica to boost the performance. Typical waxes are ethylene bis-stearamide (EBS), paraffin waxes, ester waxes and fatty alcohol waxes. These products might also have surfactants to improve emulsification and spreading in the foaming medium. Preferred defoaming agents are silicone oils, hydrophobized silica particles, wax particles, natural fatty acid oils and paraffins (preferably aromatics-free white oils). Water based defoamers are oils and waxes dispersed in a water base. The oils can be mineral oil or vegetable oils and the waxes can be fatty alcohols, fatty acid soaps or fatty acid esters. Silicone-based defoamers are polymers with silicon backbones such as polydimethylsiloxane. These might be delivered as an oil or a water based emulsion. The silicone compound can consist of a hydrophobic silica dispersed in a silicone oil. Emulsifiers are added to ensure that the silicone spreads fast and well in the foaming medium. The silicone compound might also contain silicone glycols and other modified silicone fluids. EO/PO based defoamers contain polyethylene glycol and polypropylene glycol copolymers. They are delivered as oils, water solutions, or water based emulsions. EO/PO copolymers normally have good dispersing properties and are often well suited when deposit problems are an issue.

The amount of additives is preferably 0.05 to 10 parts by weight, 0.1 to 5 parts by weight, especially 0.1 to 3 parts by weight, per 100 parts by weight of adhesive polymer (solid).

A tackified pressure-sensitive adhesive composition preferably comprises (based on solids)

60 - 95 parts by weight of pressure-sensitive adhesive polymer,

5 - 40 parts by weight of tackifier and
0 - 10 parts by weight of further additives.

For example

60 - 95 parts by weight of pressure-sensitive adhesive polymer,
5 - 40 parts by weight of tackifier and
0.1 - 1 parts by weight per 100 parts by weight of polymer of at least one wetting agent, preferably at least one dialkyl sulfosuccinate wherein the alkyl groups each have at least 9 carbon atoms,
0.1 - 3 parts by weight per 100 parts by weight of polymer of at least one thickening agent, preferably an associative polyurethane thickener,
0.05 - 1 parts by weight per 100 parts by weight of polymer of at least one defoaming agent, preferably selected from silicone oils, hydrophobized silica particles, wax particles, natural fatty acid oils and paraffins (preferably aromatics-free white oils).

A non-tackified pressure-sensitive adhesive composition preferably comprises (based on solids)

90 - 99.75 parts by weight of pressure-sensitive adhesive polymer and
0 - 10 parts by weight of further additives.

For example

95- 99.75 parts by weight of pressure-sensitive adhesive polymer,
0.1 - 1 parts by weight per 100 parts by weight of polymer of at least one wetting agent, preferably a dialkyl sulfosuccinate,
0.1 - 3 parts by weight per 100 parts by weight of polymer of at least one thickening agent, preferably an associative polyurethane thickener,
0.05 - 1 parts by weight per 100 parts by weight of polymer of at least one defoaming agent, preferably selected from silicones, paraffins and white oils.

The pressure-sensitive adhesive composition is preferably a one-component pressure-sensitive adhesive. One-component adhesives are adhesives to which no external crosslinking agent (for example isocyanate crosslinker) is added immediately before use.

After drying, the pressure-sensitive adhesive composition forms a film having a tack of preferably not less than 7 N/25 mm measured as loop tack relative to a polished steel surface or relative to a polyethylene surface (adhesive applied at an application rate of 17 g/$m^2$ on a 70 g/$m^2$ paper (HERMA Etikettenpapier)), measured relative to steel or a polyethylene surface at 23°C and 50% relative humidity at a tear-off speed of 300 mm/min (see examples for details).

After drying, the pressure-sensitive adhesive composition forms a film having a peel strength of preferably greater than 2 N/25 mm relative to a polyethylene surface (measured at an application rate of 17 g/$m^2$ on a 70 g/$m^2$ paper (HERMA Etikettenpapier) measured relative to polyethylene at 23°C and 50% relative humidity at a tear-off speed of 300 mm/min, see examples for details) and more than 7 N relative to a polished steel or a glass plate.

After drying, the pressure-sensitive adhesive composition forms a film having a shear resistance at 23°C of preferably at least 300 minutes, measured as described in the examples.

The pressure-sensitive adhesive composition may be used to produce self-adhesive articles. The articles are at least partially coated with the pressure-sensitive adhesive. The self-adhesive articles may be self-adhesive labels, self-adhesive tapes or self-adhesive films including graphic films and protective films. Suitable carrier materials are for example paper, plastic films and metal foils. The inventive self-adhesive tapes may be tapes of the above mentioned substances coated on one or both sides. The inventive self-adhesive labels may be labels made of paper or a thermoplastic film. Adhesive tapes made of thermoplastic film are particularly preferred. Suitable thermoplastic films include for example films made of polyolefins (for example polyethylene or polypropylene), polyolefin copolymers, films made of polyesters (for example polyethylene terephthalate), polyvinyl chloride or polyacetate. The surfaces of the thermoplastic polymer films have preferably been corona-treated. Foamed carriers are also possible. The labels have been coated with adhesive on one side. Preferred substrates for the self-adhesive articles are paper and polymer films.

The self-adhesive articles have been at least partially coated with a pressure-sensitive adhesive according to the invention on at least one surface. The adhesive may be applied to the articles by customary methods such as roller application, knife coating or spreading. The application rate is preferably 0.1 to 300 g, more preferably 2 to 150 g of solid per $m^2$. Application is generally followed by a drying step for removal of the water. The water may be removed by drying at 50°C to 150°C for example. The thus obtained coated substrates are used for example as self-adhesive articles, such

as adhesive labels, adhesive tapes or adhesive films. To this end the carriers may be cut into adhesive tapes, labels or films before or after application of the adhesive. The side of the substrates coated with pressure-sensitive adhesive may be covered with a release paper, for example with a siliconized paper, for later use.

The substrates to which the self-adhesive articles may advantageously be applied may be metal, wood, glass, paper or plastic for example. The self-adhesive articles are especially suitable for bonding to packaging surfaces, cardboard boxes, plastic packaging, books, windows, vapor barriers, motor vehicle bodies, tires or vehicle body parts.

The invention further relates to the use of the pressure-sensitive adhesive composition described hereinabove for producing self-adhesive labels, self-adhesive tapes or self-adhesive films. The invention further relates to self-adhesive articles coated with a pressure-sensitive adhesive composition described hereinabove.

The invention further relates to a process for producing a self-adhesive article.

The process comprises the steps of

(1) providing a pressure-sensitive adhesive composition as described hereinabove and
(2) coating at least part of a surface of a substrate with the pressure-sensitive adhesive composition.

**Examples**

The following input materials and abbreviations are used:

| | |
|---|---|
| 2-EHA | 2-ethylhexyl acrylate |
| EA | ethyl acrylate |
| bio-EA | ethyl acrylate from bio-based ethanol |
| MMA | methyl methacrylate |
| MA | methyl acrylate |
| S | styrene |
| IBA | isobutyl acrylate |
| bio-IBA | isobutyl acrylate having 57% of bio-carbon from bio-based isobutanol (BCH Brühl-Chemikalien Handel GmbH) |
| AA | acrylic acid |
| HPA | 2-hydroxypropyl acrylate |
| VAc | vinyl acetate |
| 1-OA | 1-octyl acrylate |
| bio 1-OA | 1-octyl acrylate having 73 % of bio-carbon from bio-based 1-octanol |
| 2-OA | 2-octyl acrylate |
| bio 2-OA | 2-octyl acrylate having 73 % of bio-carbon from bio-based 2-octanol |
| pphm | parts by weight per 100 parts by weight of monomers (parts per hundred monomer) |
| SC | standard conditions, 50 % rel. humidity, 1 bar, 23°C |
| Tg | glass transition temperature |
| HDPE | high density polyethylene |
| Disponil® | FES 77 surfactant from BASF |
| Dowfax® 2A1 | surfactant from DOW |
| Lumiten® I-SC | wetting agent; anionic surfactant, sodium dioctyl sulfosuccinate |
| Snowtack® 933E | rosin-ester based tackifier dispersion |
| Foamaster® WO 2310 | defoamer based on white oil and paraffin wax |
| FoamStar® SI 2213 | defoamer, modified polydimethylsiloxane |
| Foamaster® WO 2323 | defoamer based on white oil and hydrophobized silica particles |
| white oil | colorless petroleum distillate, liquid paraffin |

Preparation of the pressure-sensitive adhesive polymer dispersions

Examples E1 and E2, comparative examples C1 to C5

The emulsion feed is prepared by mixing the monomers listed in table 1 with water, 1.1 pphm of emulsifier Disponil® FES 77 and 0.2 pphm of emulsifier Dowfax® 2A1 as well as 0.2 pphm of sodium hydroxide. A reactor equipped with stirrer, temperature control and several injection possibilities, is charged with water, 0.05 pphm ascorbic acid and heated to 85 °C (C1: 90 °C). 0.11 pphm of sodium persulfate as initiator is added and the emulsion feed is started simultaneously with a feed of 0.25 pphm sodium persulfate for 195 minutes (C1: 270 minutes). After further polymerization for 25 minutes, 0.1 pphm of t-butyl hydroperoxide and 0.17 pphm of acetone sodium bisulfite are added to the reaction

mixture in 60 minutes. After final addition of 0.5 pphm of Lumiten® I-SC, the reactor is cooled to room temperature.

Examples E3 and E4, comparative examples C6 to C7

The emulsion feed is prepared by mixing the monomers listed in table 1 with water, 1.32 pphm of emulsifier Disponil® FES 77, 0.18 pphm of emulsifier Dowfax® 2A1 and 0.4 pphm Lumiten® I-SC. A reactor equipped with stirrer, temperature control and several injection possibilities, is charged with water and 0.08 pphm polystyrene seed and heated to 85 °C. 0.04 pphm of sodium persulfate as initiator is added and the emulsion feed is started simultaneously with a feed of 0.53 pphm sodium persulfate for 210 minutes. 53 minutes after start of both feeds, 0.8 pphm of polystyrene seed is added. 0.4 pphm sodium hydroxide is fed for 45 minutes to the reactor after the end of the emulsion feed. Then, 0.15 pphm of t-butyl hydroperoxide and 0.24 pphm of acetone sodium bisulfite are added to the reaction mixture in 60 minutes. The reactor is cooled to room temperature.

Table 1a: Monomer compositions of pressure-sensitive adhesive polymer dispersions; amounts in parts by weight

| | E1 | E2 | E3 | E4 | C1 | C2 | C3 | C4 [1)] | C5 [2)] | C6 [2)] | C7 [3)] |
|---|---|---|---|---|---|---|---|---|---|---|---|
| Bio-2-OA | 64.5 | 79.5 | 80 | 53 | 91.5 | 90.5 | 92.5 | | | | |
| 1-OA | 10 | | | | | | | | | | |
| i-BA | 5 | | | | | | | | | | |
| EA | | | | 20 | | | | | | | |
| 2-EHA | | | 8 | 23 | | | | 79,5 | 87,5 | 87,5 | 86.5 |
| MMA | 8 | 8 | | | 2 | 2 | 2 | 10 | 10 | 10 | 9 |
| MA | 2 | 2 | 8 | | | | | | | | |
| S | 2 | 2 | 1 | 1 | 1 | | | 2 | 1 | 1 | |
| VAc | 8 | 8 | | | 5 | 5 | 5 | 8 | | | 2 |
| HPA | 2 | 2 | 2 | 2 | | 2 | | 2 | 1 | 1 | 2 |
| AA | 0.5 | 0.5 | 1 | 1 | 0.5 | 0.5 | 0.5 | 0.5 | 0.5 | 0.5 | 0.5 |
| Tg | -31 | -31 | -41 | -41 | -40 | -41 | -41 | -40 | -46 | -46 | -46 |

[1)] according to example E7 of WO 00/68335
[2)] according to example E1 of WO 00/68335
[3)] according to example E2 of WO 00/68335

Table 1b: Monomer compositions of pressure-sensitive adhesive polymer dispersions; amounts in parts by weight

| | E5 | E6 | E7 | E8 |
|---|---|---|---|---|
| Bio-2-OA | 64.5 | 79.5 | 80 | 53 |
| Bio-1-OA | 10 | | | |
| Bio-i-BA | 5 | | | |
| Bio-EA | | | | 20 |
| 2-EHA | | | 8 | 23 |
| MMA | 8 | 8 | | |
| MA | 2 | 2 | 8 | |
| S | 2 | 2 | 1 | 1 |
| VAc | 8 | 8 | | |
| HPA | 2 | 2 | 2 | 2 |
| AA | 0.5 | 0.5 | 1 | 1 |

(continued)

| | E5 | E6 | E7 | E8 |
|---|---|---|---|---|
| Tg | -31 | -31 | -41 | -41 |

Examples labelled C are comparative examples, examples labelled E are inventive examples. Compared to the comparative examples, 2-EHA, and in some examples MMA and VAc are replaced by sufficient amounts of bio 2-OA and in some examples bio 1-OA , bio-IBA and bio-EA so as to result in polymers according to the invention with similar glass transition temperature.

Pressure-sensitive adhesive compositions for self-adhesive labels may contain tackifiers, in order to improve adhesion. They are prepared by mixing pressure-sensitive adhesive polymer dispersions tackifiers according to table 2.

Table 2: Pressure-sensitive adhesive compositions

| Example | Polymer dispersion | Tackifier |
|---|---|---|
| E5 | E2 | Snowtack® 933E 1) |
| 1) weight ratios adhesive polymer: tackifier = 75:25 based on solids | | |

Performance tests

To test the adhesive properties for use in filmic labels, the pressure-sensitive adhesives of examples E3 to E4 and C6 and C7 are coated with a coating weight of about 17 $g/m^2$ (dried film) onto an 40 $\mu$m strong oriented polypropylene (oPP) film as the carrier and dried for 3 minutes at 90°C.

To test the adhesive properties for use in paper labels, the pressure-sensitive adhesives of examples E1 to E2 (not including tackifier) and E5 (including tackifier) as well as C1 to C5 are coated at an application rate of about 17 $g/m^2$ (dried film) onto siliconized release paper and dried 3 min at 90°C. The dried adhesive polymer films are then transferred onto label paper facestock material (HERMA Etikettenpapier 70 $g/m^2$ non-primered).

Unless otherwise stated, the substrates coated with adhesive are stored for 24 h under standard conditions, before the adhesive properties are determined under standard conditions (SC: 23°C, 50% relative humidity).

Loop tack (quick stick, corresponding to FINAT test method FTM9)

Determining loop tack (also known as surface tack or quick stick) comprises determining the force required for removal from a substrate of an adhesive applied to a carrier material by pressureless adhesive bonding onto the substrate at a defined tear-off speed, measured at 23°C and 50% relative humidity. Test substrates are polished stainless steel, HDPE or glass. A test strip of 25 mm in width and 250 mm in length is cut from the carrier coated with adhesive and stored for at least 16 hours at SC. Both ends of the test strip are folded over to about 1 cm in length with the adhesive side facing inward. The adhesive strip is used to form a loop with the adhesive side facing outward, and the two ends are brought together and clamped into the upper jaw of a tensile testing machine. The test substrate holder is clamped into the lower jaw. The adhesive strip loop is moved downward by the tensile testing machine at a speed of 300 mm/minute, thus bonding the adhesive side of the test strip to the substrate without additional pressure. The tensile testing machine is halted and immediately moved upward again when the bottom edge of the upper jaw is 40 mm above the substrate. The test result is reported in N/25 mm width. The maximum value on the display (Fmax) is read off as the measure of surface tack. An average of three individual results is taken.

Peel test (corresponding to FINAT test method FTM1)

Peel strength is a measure of adhesion measured at 23°C and 50% relative humidity. In the determination of peel strength a 25 mm wide test strip is in each case bonded to a test specimen made of HDPE, polished stainless steel or glass and rolled twice with a 2 kg roller (diameter 85 mm, Shore hardness 80A). One end is then clamped in the upper jaws of a tensile strain tester. The adhesive strip is removed from the test surface at 300 mm/min at an angle of 180°, i.e. the adhesive strip is bent and removed parallel to the test specimen and the force required therefor is measured. The measure for peel strength is the force in N/25 mm obtained as the average value from five measurements. The peel strength was determined 24 hours after bonding. The adhesive strength has fully developed after this time. An average of three individual results is taken.

Self-adhesive paper labels: If the peel strength extends a certain threshold, a break of the paper carrier material

is observed. In such a case the tensile strain is not a meaningful result and "paper tear" is indicated instead.

Shear strength (corresponding to FINAT test method FTM8)

Shear strength is a measure of cohesion measured at SC. The carrier coated with pressure-sensitive adhesive is cut into test strips of 25 mm or 12.5 mm in width. To determine shear strength the test strips are bonded to stainless steel with a bonded area of 25 × 25 mm and rolled on twice with a 2 kg roller (diameter = 85 mm, Shore hardness = 80A), stored for 10 minutes or 24 hours at SC and subsequently subjected to hanging stress with a 2.5 kg weight. The measure of shear strength is the time in hours until the weight falls off; the average of 3 measurements is taken in each case.

The results of the performance tests are shown in the following tables.

Table 3: Performance results self-adhesive labels

| Example | Carrier material | Loop tack [N/25mm] | | | Peel strength [N/25mm] | | | Shear strength [h] |
|---|---|---|---|---|---|---|---|---|
| | | Steel | HDPE | Glass | Steel | HDPE | Glass | Steel |
| E1 | Paper | 10 | 8.4 | | Paper tear | 12 | | >72 |
| E2 | Paper | 8.7 | 9.7 | | Paper Tear | 14 | | >100 |
| C1 | Paper | 7.9 | 7.9 | | 14 | 6.7 | | 1.4 |
| C2 | Paper | 8.9 | 7.7 | | 6.7 | 6.4 | | 0.3 |
| C3 | Paper | 8.2 | 6.5 | | 12 | 6.1 | | 0.3 |
| C4 | Paper | 11 | 6.8 | | Paper tear | 8.0 | | 61 |
| C5 | Paper | 7.2 | 5.6 | | 13 | 4.2 | | 7.5 |
| E3 | oPP | | 4.0 | 8.9 | | 2.5 | 7.3 | 14 |
| E4 | oPP | | 5.2 | 8.5 | | 2.2 | 7.1 | 11 |
| C6 | oPP | | 6.6 | 12 | | 4.3 | 14 | 6 |
| C7 | oPP | | 7.2 | 9.8 | | 2.7 | 9.1 | 1.2 |

The examples show that examples with polymers comprising bio-based 2-octyl acrylate units instead of 2-ethylhexyl acrylate units (E3, E4 compared to C6 and C7) result in improved shear strength (high cohesion) and sufficient tack and peel strength (adhesion) when used for filmic labels.

The examples show that copolymerizing 1-2 parts per weight each of styrene and hydroxyalkyl acrylate is particularly beneficial for an optimum balance of shear and peel resistance, in particular for improved shear strength when used for paper labels (E1, E2 compared to C1 to C3). The examples show that examples with polymers comprising bio-based 2-octyl acrylate units instead of 2-ethylhexyl acrylate units (E1, E2 compared to C4 and C5) result in improved shear strength (high cohesion) and improved peel strength (adhesion) when used for paper labels.

Examples of formulation suggestions (parts by weight based on solids):

| | F1 | F2 | F3 | F4 | F5 | F6 | F7 | F8 |
|---|---|---|---|---|---|---|---|---|
| PSA dispersion E5 | 90 | | | | 100 | | | |
| PSA dispersion E6 | | 80 | | | | 100 | | |
| PSA dispersion E7 | | | 70 | | | | 100 | |
| PSA dispersion E8 | | | | 60 | | | | 100 |
| Snowtack® 233E | 10 | 20 | 30 | 40 | | | | |
| Lumiten® I-SC | 0.1 | 0.4 | 0.7 | 1 | 0.1 | 0.4 | 0.7 | 1 |
| associative poly-urethane thickener | 0.1 | 1 | 2 | 3 | 0.1 | 1 | 2 | 3 |
| FoamStar® SI 2213 | 0.05 | | | 1 | | | 0.6 | 1 |
| Foamaster® WO 2310 | | 0.2 | | | 0.05 | | | 1 |

(continued)

| | F1 | F2 | F3 | F4 | F5 | F6 | F7 | F8 |
|---|---|---|---|---|---|---|---|---|
| Foamaster® WO 2323 | | | 0.4 | | | 0.3 | | |

**Claims**

1. A pressure-sensitive adhesive composition in the form of an aqueous polymer dispersion comprising at least one dispersed pressure-sensitive adhesive polymer formed by emulsion polymerization of

    (i) from 10 to 95% by weight, preferably from 40 to less than 90% by weight, based on the sum of all monomers, of 2-octyl acrylate;
    (ii) from 0.1 to 5% by weight, preferably from 0.5 to 5% by weight, based on the sum of all monomers, of styrene;
    (iii) from 0.1 to 5% by weight based on the sum of all monomers, of a hydroxyalkyl acrylate;
    (iv) from 0.1 to 10% by weight, preferably from 0.2% to 8% by weight, based on the sum of all monomers, of at least one monomer having at least one acid group;
    (v) from 0 to 70% by weight, based on the sum of all monomers, of 1-octyl acrylate;
    (vi) from 0 to 40% by weight, based on the sum of all monomers, of isobutyl acrylate;
    (vii) from 0 to 70% by weight, based on the sum of all monomers, of ethyl acrylate;
    (viii) from 0 to 60% by weight, based on the sum of all monomers, of 2-ethylhexyl acrylate;
    (ix) from 0 to 20% by weight, preferably from 2 to 15% by weight based on the sum of all monomers, of methyl (meth)acrylate;
    (x) from 0 to 10% by weight, based on the sum of all monomers, of vinyl acetate;
    (xi) optionally at least one (meth)acrylate alkyl ester monomer different from monomers (i) and (v) to (viii) and having, when polymerized as a homopolymer, a glass transition temperature of less than -20 °C;
    (xii) optionally at least one functional monomer selected from hydroxyl functional (meth)acrylate monomers different from (iii) and ureido substituted ethylenically unsaturated monomers;
    (xiii) optionally further monomers different from (i) to (xii),

    wherein each of the weight ratios of 2-octyl acrylate (i) to styrene (ii) and of 2-octyl acrylate (i) to hydroxy alkyl acrylate (iii) is from 2:1 to 100:1, preferably from 20:1 to 85:1;
    wherein the glass transition temperature of the pressure-sensitive adhesive polymer is below -20°C, preferably from -50 to -25 °C, determined by differential scanning calorimetry as the midpoint temperature when evaluating the second heating curve at a heating rate of 20 K/min.

2. The pressure-sensitive adhesive composition according to claim 1, wherein the pressure-sensitive adhesive composition comprises at least one tackifier in an amount of from 5 to 40 parts by weight based on 100 parts by weight of polymer and the tackifier is selected from the group consisting of natural resins, hydrocarbon resins, tackifying polyacrylates or mixtures thereof.

3. The pressure-sensitive adhesive composition according to any of claims 1 to 2, wherein the hydroxyalkyl acrylate is hydroxypropyl acrylate.

4. The pressure-sensitive adhesive composition according to any of claims 1 to 3, wherein monomer (iv) is used from 0.2 to 8% by weight and selected from acryl acid, methacrylic acid and itaconic acid.

5. The pressure sensitive adhesive composition according to any one of claims 1 to 4, wherein at least the carbon atoms of the alkyl group of at least one of the monomers 2-octyl acrylate, 1-octyl acrylate, isobutyl acrylate and ethyl acrylate is of biological origin.

6. The pressure sensitive adhesive composition according to any one of claims 1 to 5, wherein the 2-octyl acrylate monomer (i) is made from bio-based 2-octanol and non-bio-based or bio-based acrylic acid.

7. The pressure-sensitive adhesive composition according to any one of claims 1 to 6, wherein monomer (vi) comprises 2-hydroxypropyl acrylate in an amount from 0.5 to 5% by weight, based on the sum of all monomers.

8. The pressure-sensitive adhesive composition according to any one of claims 1 to 7, wherein monomer (xii) comprises 2-(2-oxoimidazolidin-1-yl)ethyl methacrylate in an amount from 0.05 to 2% by weight, based on the sum of all monomers.

9. The pressure-sensitive adhesive composition according to any one of claims 1 to 8, comprising at least one pressure-sensitive adhesive polymer formed by emulsion polymerization of

(i) from 40 to 95% by weight, based on the sum of all monomers, of 2-octyl acrylate;
(ii) from 0.5% to 5% by weight based on the sum of all monomers, of styrene;
(iii) from 0.5 to 5% by weight based on the sum of all monomers, of at least one hydroxyalkyl acrylate, preferably selected from hydroxyethyl acrylate, hydroxyethyl methacrylate, hydroxypropyl acrylate and hydroxybutyl acrylate;
(iv) from 0.2% to 8% by weight, based on the sum of all monomers, of at least one monomer having at least one acid group, preferably selected from acrylic acid and methacrylic acid;
(v) from 0 to 30% by weight, based on the sum of all monomers, of 1-octyl acrylate;
(vi) from 0 to 20% by weight, based on the sum of all monomers, of i-butyl acrylate;
(vii) from 0 to 40% by weight, based on the sum of all monomers, of ethyl acrylate;
(viii) from 0 to 40% by weight, based on the sum of all monomers, of 2-ethylhexyl acrylate;
(ix) from 0 to 15% by weight, based on the sum of all monomers, of methyl (meth)acrylate;
(x) from 0 to 10% by weight, based on the sum of all monomers, of vinyl acetate;

and preferably no further monomer (xi) to (xiii).

10. The pressure-sensitive adhesive composition according to claim 9, comprising at least one pressure-sensitive adhesive polymer formed by emulsion polymerization of

(i) from 50 to 80% by weight, based on the sum of all monomers, of 2-octyl acrylate;
(ii) from 0.5 to 5% by weight based on the sum of all monomers, of styrene;
(iii) from 0.5 to 5% by weight based on the sum of all monomers, of a hydroxyalkyl acrylate, preferably selected from hydroxyethyl acrylate, hydroxyethyl methacrylate, hydroxypropyl acrylate and hydroxybutyl acrylate;
(iv) from 0.2 to 8% by weight, based on the sum of all monomers, of at least one monomer having at least one acid group, preferably selected from acrylic acid and methacrylic acid;
wherein the sum of the amount of monomers (v) to (viii) is from 18 to 48% by weight;
(ix) from 0 to 15% by weight, based on the sum of all monomers, of methyl (meth)acrylate;
(x) from 0 to 10% by weight, based on the sum of all monomers, of vinyl acetate;

and preferably no further monomer (xi) to (xiii).

11. The pressure-sensitive adhesive composition according to claim 9, comprising at least one pressure-sensitive adhesive polymer formed by emulsion polymerization of

(i) from 75 to 95% by weight, based on the sum of all monomers, of 2-octyl acrylate;
(ii) from 0.5% to 5% by weight based on the sum of all monomers, of styrene;
(iii) from 0.5 to 5% by weight based on the sum of all monomers, of a hydroxyalkyl acrylate preferably selected from hydroxyethyl acrylate, hydroxyethyl methacrylate, hydroxypropyl acrylate and hydroxybutyl acrylate;
(iv) from 0.2% to 8% by weight, based on the sum of all monomers, of at least one monomer having at least one acid group preferably selected from acrylic acid and methacrylic acid;
wherein the sum of the amount of monomers (v) to (viii) is from 0 to 15% by weight;
.(ix) from 0 to 15% by weight, based on the sum of all monomers, of methyl (meth)acrylate;
(x) from 0 to 10% by weight, based on the sum of all monomers, of vinyl acetate;

and preferably no further monomer (xi) to (xiii).

12. The pressure-sensitive adhesive composition according to any one of claims 1 to 11, wherein the pressure-sensitive adhesive composition is a one-component pressure-sensitive adhesive to which no external crosslinking agent is added immediately before use.

13. The use of a pressure-sensitive adhesive composition according to any of the preceding claims for producing self-adhesive labels, self-adhesive tapes or self-adhesive films.

**14.** A self-adhesive article coated with a pressure-sensitive adhesive composition according to any of claims 1 to 12.

**15.** A process for producing a self-adhesive article, the process comprises the steps of

(1) providing a pressure-sensitive adhesive composition according to any of claims 1 to 12; and
(2) coating at least part of a surface of a substrate with the pressure-sensitive adhesive composition.

Europäisches Patentamt
European Patent Office
Office européen des brevets

# EUROPEAN SEARCH REPORT

Application Number
EP 22 19 5431

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y,D | US 6 620 870 B1 (GERST MATTHIAS [DE] ET AL) 16 September 2003 (2003-09-16)<br>* the whole document *<br>* columns 1-2; table 1 * | 1-15 | INV.<br>C08F220/18<br>C09J133/08 |
| Y | EP 1 342 762 A2 (BASF CORP [US]) 10 September 2003 (2003-09-10)<br>* the whole document *<br>* paragraphs [0019] - [0020]; claims 15-29 * | 1-15 | |
| Y | WO 2022/034247 A1 (TESA SE [DE]) 17 February 2022 (2022-02-17)<br>* the whole document *<br>* table 3 * | 1-15 | |
| Y | US 2016/002140 A1 (COLBY JOSHUA L [US] ET AL) 7 January 2016 (2016-01-07)<br>* the whole document *<br>* paragraph [0003]; examples * | 1-15 | |

TECHNICAL FIELDS SEARCHED (IPC)

C08F
C09J

The present search report has been drawn up for all claims

| Place of search | Date of completion of the search | Examiner |
|---|---|---|
| The Hague | 20 February 2023 | Droghetti, Anna |

1

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 22 19 5431

This annex lists the patent family members relating to the patent documents cited in the above-mentioned European search report. The members are as contained in the European Patent Office EDP file on
The European Patent Office is in no way liable for these particulars which are merely given for the purpose of information.

20-02-2023

| Patent document cited in search report | Publication date | Patent family member(s) | Publication date |
|---|---|---|---|
| US 6620870 B1 | 16-09-2003 | AR 023866 A1 | 04-09-2002 |
| | | AT 276325 T | 15-10-2004 |
| | | AU 4120500 A | 21-11-2000 |
| | | DE 19920807 A1 | 09-11-2000 |
| | | EP 1169403 A1 | 09-01-2002 |
| | | ES 2228498 T3 | 16-04-2005 |
| | | US 6620870 B1 | 16-09-2003 |
| | | WO 0068335 A1 | 16-11-2000 |
| EP 1342762 A2 | 10-09-2003 | AT 316995 T | 15-02-2006 |
| | | DE 60208966 T2 | 03-08-2006 |
| | | EP 1342762 A2 | 10-09-2003 |
| | | ES 2256397 T3 | 16-07-2006 |
| | | US 6927267 B1 | 09-08-2005 |
| WO 2022034247 A1 | 17-02-2022 | NONE | |
| US 2016002140 A1 | 07-01-2016 | BR 112015023718 A2 | 18-07-2017 |
| | | CN 105073704 A | 18-11-2015 |
| | | EP 2970094 A1 | 20-01-2016 |
| | | KR 20150130416 A | 23-11-2015 |
| | | US 2016002140 A1 | 07-01-2016 |
| | | WO 2014149669 A1 | 25-09-2014 |

EPO FORM P0459

For more details about this annex : see Official Journal of the European Patent Office, No. 12/82

## REFERENCES CITED IN THE DESCRIPTION

*This list of references cited by the applicant is for the reader’s convenience only. It does not form part of the European patent document. Even though great care has been taken in compiling the references, errors or omissions cannot be excluded and the EPO disclaims all liability in this regard.*


### Patent documents cited in the description

- WO 2009129087 A
- WO 0068335 A
- US 20200017725 A1
- EP 2626397 A1
- EP 81083 A
- WO 2013117428 A

### Non-patent literature cited in the description

- **T.G. FOX.** *Bull. Am. Phys. Soc.,* 1956, vol. 1, 123
- Ullmann’s Encyclopedia of Industrial Chemistry. Verlag Chemie, 1980, vol. 19, 18
- Ullmann’s Encyclopedia of Industrial Chemistry. VCH, 1992, vol. 5, 169
- **J. BRANDRUP ; E.H. IMMERGUT.** Polymer Handbook. J. Wiley, 1966
- Makromolekulare Stoffe [Macromolecular Materials. **HOUBEN-WEYL.** Methoden der organischen Chemie [Methods of Organic Chemistry. Georg-Thieme-Verlag, 1961, vol. XIV/1, 411-420
- *Adhesive Age,* July 1987, 19-23
- *Polym. Mater. Sci. Eng.,* 1989, vol. 61, 588-592